# EUROPÄISCHE PATENTSCHRIFT

(11) **EP 3 798 296 B1**
(45) Veröffentlichungstag und Bekanntmachung des Hinweises auf die Patenterteilung: **07.06.2023**
(21) Anmeldenummer: 20187093.8
(22) Anmeldetag: 22.07.2020
(51) Int. Cl.: C12C 7/17

(54) **VERFAHREN ZUR GEWINNUNG VON WÜRZE DURCH ABLÄUTERN VON MAISCHE MIT EINEM LÄUTERBOTTICH**
METHOD FOR OBTAINING WORT BY LAUTERING MASH WITH A LAUTER TUN
PROCÉDÉ D'OBTENTION DU MOÛT PAR FILTRAGE DU BRASSIN À L'AIDE D'UNE CUVE DE FILTRAGE

(30) Priorität: 30.09.2019 DE 102019126368
(43) Veröffentlichungstag der Anmeldung: 31.03.2021
(73) Patentinhaber: GEA Brewery Systems GmbH, 97318 Kitzingen (DE)
(72) Erfinder: ZIEGLER, Georg, 97318 Kitzingen (DE)
(74) Vertreter: advotec.

(56) Entgegenhaltungen:
- WO-A1-92/08782
- WO-A1-2005/040329
- WO-A2-00/77263
- AT-B- 277 119
- US-A- 2 948 661

## Beschreibung

Die Erfindung betrifft ein Verfahren zur Gewinnung von Würze durch Abläutern von Maische mit einem Läuterbottich nach dem Oberbegriff des Anspruchs 1.

Gattungsgemäße Läuterverfahren sind beispielsweise aus der DE 10 2013 113 299 A1 und der DE 197 39 734 C2 bekannt. Das Abläutern der Maische hat den Hauptzweck, die in der Maische enthaltenen Feststoffpartikel von der Würze abzutrennen. Die abgefilterten Feststoffpartikel sammeln sich als Treber auf dem Senkboden des Läuterbottichs. Die Filterwirkung zur Abfilterung der Feststoffpartikel beruht nicht so sehr auf dem Rückhalten der Feststoffpartikel durch die Struktur des Senkbodens selber. Vielmehr bildet sich auf dem Senkboden ein Treberkuchen, der aus den Feststoffpartikeln aufgebaut ist und der die für das Abläutern notwendige Filterwirkung erbringt.

Während des Abläuterns kann es vorkommen, dass der Treberkuchen soweit komprimiert wird, dass seine Permeabilität, das heißt seine Durchgängigkeit, unzulässig stark abfällt. Damit steigt die Druckdifferenz über dem Senkboden, auf dem die filtrierende Schicht des Treberkuchens aufliegt. Gemessen wird die Druckdifferenz zwischen oberhalb und unterhalb des Treberkuchens. Da sich dadurch die Filtrationsgeschwindigkeit stark reduziert und somit die Läuterzeit verlängert, muss gegengesteuert werden.

Ab einem gewissen Wert der Druckdifferenz wird ein sogenannter Tiefschnitt mit dem Hackwerk des Läuterbottichs ausgelöst, um dadurch die Permeabilität des Treberkuchens wieder zu erhöhen. Abhängig von der Druckdifferenz kann das Hackwerk mit seinen Aufhackmessern in unterschiedlichen Höhen durch den Treberkuchen geführt und damit die filtrierende Schicht aufgelockert werden. Dies ist aus der DE 3 844 389 C1 bekannt. Bei einem Tiefschnitt wird das Hackwerk so tief in den Treberkuchen gefahren, dass auch die untersten Schichten des Trebers aufgelockert werden können. Es ist hinlänglich bekannt, dass eben in diesen tiefen Schichten die Druckdifferenz entsteht. Dabei ist aus mechanischen Gründen eine Berührung zwischen der Unterseite des Hackwerks und der Oberseite des Senkbodens unbedingt zu vermeiden, so dass das Hackwerk auch in der tiefstmöglichen Position einen Sicherheitsabstand von beispielsweise circa 10 bis 15 mm zur Oberseite des Senkbodens aufweist. Dieser Bereich des Treberkuchens kann durch das Hackwerk nicht aufgelockert werden.

Beim Läutern mit den bekannten Läuterverfahren kann es vorkommen, dass die gewünschte Verbesserung der Permeabilität des Treberkuchens durch den Tiefschnitt mit einem Hackwerk im Wesentlichen ausbleibt. Die Druckdifferenz steigt dann nach dem Tiefschnitt innerhalb kurzer Zeit, beispielsweise innerhalb von 2 Minuten, sehr schnell wieder an, so dass erneut ein Tiefschnitt durchgeführt werden muss. Dieser unerwünschte Effekt kann darauf beruhen, dass im vorherigen Verlauf des Läuterprozesses bereits eine zu extensive Aufhackarbeit durchgeführt wurde, so dass der Treberkuchen zu schnell und mit zu großer Tiefe aufgehackt wurde. Dadurch können feine Bestandteile des Treberkuchens aus dem Oberteig in tiefere Schichten des Treberkuchens eingearbeitet werden, wodurch die Porengröße des Treberkuchens in unerwünschter Weise verringert wird.

Außerdem kann der im Sicherheitsbereich des Hackwerks befindliche untere Teil des Treberkuchens durch das Aufhacken nicht aufgelockert werden, so dass die Permeabilität in diesem Bereich durch die Aufhackarbeit des Hackwerks nicht beeinflusst werden kann. Zuletzt können sich außerdem Treberanteile, insbesondere Spelzenteilchen, in die Ritzen des Senkbodens hineinlegen und dadurch das Ablaufen der Würze nach Passieren des Treberkuchens durch die Öffnungen im Senkboden behindern. Diese Treberbestandteile in den Öffnungen bzw. Schlitzen des Senkbodens können mit der Aufhackarbeit nicht nach oben zurückgezogen werden.

WO9208782 A1 offenbart ein Verfahren zur Gewinnung von Würze durch Abläutern von Maische in einem Läuterbottich, wobei dann, wenn der Treberkuchen eine gewisse minimale Durchlässigkeit für die Würze durch Verdichtung des Kuchens erreicht hat, der Druck über dem Treberkuchen erhöht wird. Die WO9208782 A1 sieht dabei die zumindest teilweise Einspeisung von Inertgas in den Läuterbottich vor.

WO0077263 A2 offenbart ein Verfahren ähnlich dem in WO9208782 A1, wobei allerdings nicht der Druck, sondern die Höhe der Aufhackmaschine reguliert wird, zugleich auch unter Berücksichtigung der Trübung der abfließenden Würze.

AT277119B B zeigt ebenfalls ein Verfahren zur Gewinnung von Würze, wobei die Würze nicht abgelassen, sondern der Senkboden schrittweise abgehoben wird.

WO2005040329 A1 offenbart einen Läuterbottich zum Abläutern von Bierwürze mit einem Senkboden zur Rückhaltung des Treberkuchens, wobei der Senkboden eine Vielzahl von Durchtrittsöffnungen aufweist und zudem höhenverstellbar ist.

US2,948,661 A offenbart einen Läuterbottich, bei welchem die Abzugsgeschwindigkeit an den Widerstand des Treberkuchens angepasst wird.

Aufgabe der vorliegenden Erfindung ist es, ein Verfahren zur Gewinnung von Würze durch Abläutern von Maische mit einem Läuterbottich vorzuschlagen, das die Permeabilität des Treberkuchens unabhängig von der Betriebsweise des Hackwerks im Läuterbottich verbessern kann.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren sieht zunächst vor, dass der Läuterprozess unterbrochen wird, sobald ein vorgegebener Durchlässigkeitswert des auf dem Senkboden gebildeten Treberkuchens unterschritten wird, beziehungsweise eine vorgegebene Druckdifferenz überschritten wird. Durch diese Unterbrechung wird die von oben nach unten gerichtete Strömung der Würze durch den Treberkuchen und den darunterliegenden Senkboden unterbrochen.

Anschließend ist es erfindungsgemäß vorgesehen, dass Würze in den zwischen Läuterbottichboden und Senkboden gebildeten Zwischenraum eingefördert wird. Durch dieses Einfördern der Würze in den Zwischenraum zwischen Läuterbottichboden und Senkboden erhöht sich der Flüssigkeitsdruck, so dass die Würze schließlich vertikal nach oben aus dem Zwischenraum durch die Öffnungen des Senkbodens hindurch in den Treberkuchen überströmt. Durch diese nach oben gerichtete Strömung der Würze in den Treberkuchen hinein kann insbesondere die unterste Schicht des Treberkuchens, die bei der Aufhackarbeit mit dem Hackwerk nicht erreicht werden kann, aufgelockert werden. Durch dieses Auflockern des Treberkuchens, insbesondere in seinen untersten Schichten, wird die Permeabilität in gewünschter Weise erhöht, so dass anschließend der Läuterprozess mit wieder verbesserter Permeabilität fortgesetzt werden kann.

Welche zusätzlichen Maßnahmen zur Erhöhung der Permeabilität des Treberkuchens alternativ bzw. additiv ergriffen werden, ist grundsätzlich beliebig. Gemäß einer besonders bevorzugten Verfahrensvariante ist es vorgesehen, dass der Treberkuchen während des erfindungsgemäß vorgesehenen Überströmens der Würze zusätzlich mit einem im Läuterbottich vorgesehenen Hackwerk aufgelockert wird. Im Ergebnis kann dadurch erreicht werden, dass die oberen Teile des Treberkuchens mit den Aufhackmessern aufgelockert werden, wohingegen die unteren Schichten des Treberkuchens zugleich mit der von unten durch den Senkboden in den Treberkuchen einströmenden Würze aufgelockert werden. Außerdem wird durch das rechtzeitige Aufhacken des Treberkuchens mit dem Hackwerk die nach oben gerichtete Strömung der Würze durch den Treberkuchen hindurch verbessert, wodurch der Strömungswiderstand im oberen Teil des Treberkuchens durch die Aufhackarbeit entsprechend verringert ist.

In welcher Phase der Aufhackarbeit zugleich auch Würze von unten in den Treberkuchen eingepumpt wird, um die Durchlässigkeit des Treberkuchens zu verbessern, ist grundsätzlich beliebig. Von größter Bedeutung ist diese zusätzliche erfindungsgemäße Maßnahme zur Verbesserung der Durchlässigkeit des Treberkuchens, wenn das Hackwerk bereits in seiner tiefsten Stellung einen Tiefschnitt durchführt. In dieser tiefsten Stellung des Hackwerks werden die Aufhackmesser nur unter Einhaltung eines Sicherheitsabstands von beispielsweise 10 bis 15 mm kurz über der Oberseite des Senkbodens bewegt. Dieser Bereich des Treberkuchens im Sicherheitsbereich des Hackwerks, der aufgrund der Einhaltung des Sicherheitsabstands mit den Aufhackmessern nicht aufgelockert werden kann, wird dann erfindungsgemäß durch die nach oben gerichtete Würzeströmung aufaelockert, und die Durchlässigkeit wird verbessert. Insbesondere ist es dabei möglich, die in der untersten Schicht angesammelten Feinpartikel des Treberkuchens wieder in weiter oben gelegene Bereiche des Treberkuchens zu fördern, so dass die Permeabilität des Treberkuchens nachhaltig verbessert wird. Außerdem können die in den Schlitzen des Senkbodens festgesetzten Feststoffbestandteile des Treberkuchens, beispielsweise größere Spelzen, nach oben gedrückt und dadurch kann die Durchlässigkeit des Senkbodens verbessert werden.

Zu welchem Zeitpunkt des Läuterprozesses diese erfindungsgemäße Unterbrechung und die Durchlässigkeit des Treberkuchens durch die nach oben gerichtete Würzeströmung verbessert werden, ist grundsätzlich beliebig. Bevorzugt kann der Läuterprozess zur Auflockerung mit der von unten nach oben gerichteten Würzeströmung dann unterbrochen werden, wenn eine vorgegebene Druckdifferenz in der Würze überschritten wird. Diese Druckdifferenz misst den Differenzdruck zwischen der Würze auf dem Treberkuchen und der Würze unter dem Treberkuchen.

Da zur Auflockerung des Treberkuchens erfindungsgemäß Würze eingesetzt wird, die von unten in den Treberkuchen einströmt, ist eine Verwässerung der Würze, wie sie beispielsweise beim Einspülen von Wasser unvermeidlich ist, grundsätzlich ausgeschlossen. Welche Art von Würze dabei zur Durchführung des erfindungsgemäßen Verfahrens eingesetzt wird, ist grundsätzlich beliebig. Bevorzugt sollte es sich dabei um Würze aus dem gleichen Batch handeln, der bei Durchführung des erfindungsgemäßen Verfahrens im Läuterbottich abgeläutert wird. Bevorzugt wird die Würze vor dem ersten Anschwänzen verwendet, da bis zu diesem Zeitpunkt alle Flüssigkeit im Läuterbottich die gleiche Dichte hat und damit kein Konzentrationsgefälle im Treberbett zerstört wird. Um dies zu erreichen, ist es gemäß einer bevorzugten Verfahrensvariante vorgesehen, dass über dem Treberkuchen befindliche Würze aus dem Läuterbottich abgepumpt und in den zwischen Läuterbottichboden und Senkboden gebildeten Zwischenraum eingepumpt wird. Dieser Anteil der Würze, der zur Durchführung des erfindungsgemäßen Verfahrens eingesetzt wird, passiert somit nicht den Treberkuchen, so dass die entsprechende Filtrationswirkung für diesen Anteil der Würze entfällt. In vielen Fällen ist diese zusätzliche Trübung der Läuterwürze aber unerheblich, da zumindest nach Ende des Trübwürzepumpens die auf dem Treberkuchen anstehende Würze vielfach einen sehr geringen Trübungsgrad aufweist.

An welcher Stelle die Würze aus dem Treberkuchen entnommen wird, um sie anschließend in den Zwischenraum zwischen Läuterbottichboden und Senkboden einzupumpen, ist grundsätzlich beliebig. Bevorzugt kann die Würze durch eine am Bottichständer mündende Leitung aus dem Läuterbottich abgepumpt werden. Dabei handelt es sich um eine zentrale Entnahmestelle im Läuterbottich, die in den meisten Läuterbottichen ohnehin vorhanden ist. Diese Entnahmestelle ist während des Läuterprozesses zum überwiegenden Teil vollständig mit noch unfiltrierter Würze überdeckt, so dass ein Ansaugen von Luft vermieden wird.

Auf welchem Weg die Würze in den Zwischenraum zwischen Läuterbottichboden und Senkboden eingefördert wird, ist grundsätzlich beliebig. Bevorzugt werden dazu die Sammelleitungen verwendet, durch die während des eigentlichen Abläuterprozesses die Läuterwürze aus dem Läuterbottich nach unten ausströmt. Soweit diese Sammelleitungen nämlich ohnehin am Läuterbottich vorhanden sind, kann auf eine zusätzliche Verrohrung, die in den Läuterbottichboden mündet, verzichtet werden, was die Kosten entsprechend verringert.

Bekannte Läuterbottiche verfügen üblicherweise über eine Trübwürzeverrohrung zum zirkulierenden Umpumpen von Trübwürze. Dieses Trübwürzepumpen wird üblicherweise vor Beginn des eigentlichen Abläutervorgangs durchgeführt, um für die Ausbildung eines ausreichend filtrierenden Treberkuchens zu sorgen. Beim Trübwürzepumpen wird die durch den Senkboden nach unten abgelaufene Würze, die noch eine sehr hohe Trübung aufweist und deshalb Trübwürze genannt wird, zunächst erneut in den Läuterbottich oberhalb des Senkbodens eingepumpt. Auf diese Weise zirkuliert die Würze zunächst und durchläuft den Senkboden von oben nach unten, bis eine akzeptable Trübung erreicht ist. Dabei bildet sich im Laufe des Trübwürzepumpens ein Filterbett auf dem Senkboden, das für die entsprechende Filtrationswirkung sorgt. Sobald die Trübwürze eine Trübung unterhalb einer vorgegebenen Trübungsgrenze aufweist, kann dann das Trübwürzepumpen beendet und das Abläutern der Läuterwürze begonnen werden. Die Trübwürzeverrohrung ergibt dabei die Möglichkeit, die Würze aus dem Zwischenraum zwischen Senkboden und Läuterbottichboden abzuziehen und oberhalb des Senkbodens wieder in den Läuterbottich einzupumpen. Insofern ist es im Hinblick auf eine maximale Reduktion der Investitionskosten, die erforderlich sind, um einen Läuterbottich für die Durchführung des erfindungsgemäßen Verfahrens zu ertüchtigen, besonders vorteilhaft, wenn die Trübwürzeverrohrung zumindest teilweise für die Durchführung des erfindungsgemäßen Verfahrens eingesetzt wird. Bei den meisten vorhandenen Läuterbottichen reichen bereits sehr geringe Modifikationen an dem Anlageaufbau, um die Trübwürzeverrohrung so zu modifizieren, dass sie für die Durchführung des erfindungsgemäßen Verfahrens geeignet ist. Soweit in der Trübwürzeverrohrung eine Förderpumpe eingebaut ist, in der die Würze in zwei Richtungen gepumpt werden kann, sind im Prinzip keinerlei zusätzliche Installationen an der Trübwürzeverrohrung erforderlich, um das erfindungsgemäße Verfahren durchführen zu können. Denn bei der Durchführung des erfindungsgemäßen Verfahrens wird die Würze gerade umgekehrt wie beim Trübwürzepumpen zunächst aus dem Inneren des Läuterbottichs oberhalb des Senkbodens abgepumpt und dann von unten in den Zwischenraum zwischen Senkboden und Läuterbottichboden eingepumpt. Bei einer zweiläufigen Förderpumpe muss also im Vergleich zum Trübwürzepumpen lediglich die Förderrichtung der Förderpumpe umgeschaltet werden, um das erfindungsgemäße Verfahren durchzuführen. Soweit nur eine einläufige Förderpumpe vorgesehen ist, mit der die Würze nur in eine Richtung gefördert werden kann, ist es besonders vorteilhaft, wenn an der Trübwürzeverrohrung zwei absperrbare Bypassleitungen vorgesehen sind. Mit diesen Bypassleitungen kann die Würze in der Trübwürzeverrohrung so umgelenkt werden, dass das erfindungsgemäße Verfahren unter Verwendung eines Großteils der Trübwürzeverrohrung nutzbar ist. Die beiden Bypassleitungen dienen dabei lediglich dazu, die Trübwürzeverrohrung so umzulenken, dass die Würze bei Durchführung des erfindungsgemäßen Verfahrens mit der einläufigen Förderpumpe gefördert wird. Die erste Bypassleitung dient dazu, die Würze, die aus dem Läuterbottich abgepumpt wurde, zu einer stromaufwärts der Förderpumpe angeordneten Mündungsstelle in der Trübwürzeverrohrung zu fördern. Die zweite Bypassleitung dient dazu, die Würze, die bereits die Förderpumpe durchlaufen hat, von einer zweiten Mündungsstelle durch die Trübwürzeverrohrung in den zwischen Läuterbottichboden und Senkboden gebildeten Zwischenraum zu fördern.

Soweit in der Trübwürzeverrohrung für die Durchführung des erfindungsgemäßen Verfahrens zusätzliche Bypassleitungen vorgesehen sind, sollten an den Mündungsstellen entsprechende Absperrorgane vorgesehen sein, um den Würzefluss wahlweise umzulenken. Beim Trübwürzepumpen wird die Würze in konventioneller Weise durch die Trübwürzeverrohrung gepumpt, wohingegen bei Durchführung des erfindungsgemäßen Verfahrens die Absperrorgane umgeschaltet werden, um die Würze durch die Bypassleitungen entsprechend umzulenken.

Wird die Trübwürzeverrohrung für die Durchführung des erfindungsgemäßen Verfahrens zumindest teilweise genutzt, ergibt sich daraus auch ein zusätzlicher Vorteil im Hinblick auf die Effektivität und Ausbeute des Läuterprozesses. Denn nach Ende des Trübwürzepumpens verbleibt in der Trübwürzeverrohrung regelmäßig ein bestimmter Anteil an Würze, der bereits eine sehr geringe Trübung aufweist. Dieser in der Trübwürzeverrohrung verbliebene Anteil von wenig getrübter Trübwürze kann dann im Rahmen des erfindungsgemäßen Verfahrens während des Abläuterns des Anschwänzwassers zumindest teilweise in den zwischen Läuterbottich und Senkboden gebildeten Zwischenraum eingefördert werden. Auf diese Weise wird dieser Anteil der Trübwürze für den gleichen Batch genutzt und die Ausbeute des Läuterprozesses entsprechend erhöht.

Selbstverständlich ist es nicht in allen Phasen des Läuterprozesses sinnvoll, das erfindungsgemäße Verfahren zur Verbesserung der Permeabilität des Treberkuchens durchzuführen. Insbesondere ist es zu Beginn des Abläuterns der Vorderwürze nicht sinnvoll, die unteren Schichten des Treberkuchens aufzulockern. Gemäß einer bevorzugten Ausführungsform ist es deshalb vorgesehen, dass das Einfördern von Würze in den zwischen Läuterbottichboden und Senkboden gebildeten Zwischenraum zu Beginn des Abläuterns der Vorderwürze ausgeschlossen ist. Gemäß einer bevorzugten Verfahrensvariante ist es vorgesehen, dass das erfindungsgemäße Verfahren frühestens dann erstmals ausgeführt wird, wenn bereits 20 % des Vorderwürzevolumens aus dem Läuterbottich abgeläutert sind.

Weiterhin ist es zum Ende des Abläuterns der Nachgüsse nicht mehr sinnvoll, das erfindungsgemäße Verfahren durchzuführen. Ein Verlauf der Nachgüsse dünnt die Würze im Treberkuchen von oben nach unten hin immer mehr aus. Es ist deshalb sinnvoll, dass das Einfördern von Würze in den zwischen Läuterbottichboden und Senkboden gebildeten Zwischenraum zum Ende des Abläuterns des Anschwänzwassers aus dem Läuterbottich ausgeschlossen ist.

Gemäß einer bevorzugten Verfahrensvariante ist es vorgesehen, dass das erfindungsgemäße Verfahren nicht mehr durchgeführt wird, sobald 40 % des Nachgussvolumens aus dem Läuterbottich abgeläutert sind.

Es zeigen:
- **Fig. 1**: einen Läuterbottich mit einer Verrohrung zur Durchführung des erfindungsgemäßen Verfahrens in schematisierter Ansicht;
- **Fig. 2**: den Läuterbottich gemäß Fig. 1 mit dem Würzefluss während des Trübwürzepumpens;
- **Fig. 3**: den Läuterbottich gemäß Fig. 2 während des Trübwürzepumpens in einer vergrößerten Schnittdarstellung;
- **Fig. 4**: den Läuterbottich gemäß Fig. 1 während des Abläuterns der Läuterwürze;
- **Fig. 5**: den Läuterbottich gemäß Fig. 4 während des Abläuterns der Läuterwürze in einer vergrößerten Schnittdarstellung;
- **Fig. 6**: den Läuterbottich gemäß Fig. 1 mit dem Würzedurchfluss bei Durchführung des erfindungsgemäßen Verfahrens;
- **Fig. 7**: den Läuterbottich gemäß Fig. 6 bei Durchführung des erfindungsgemäßen Verfahrens in einer vergrößerten Schnittdarstellung.

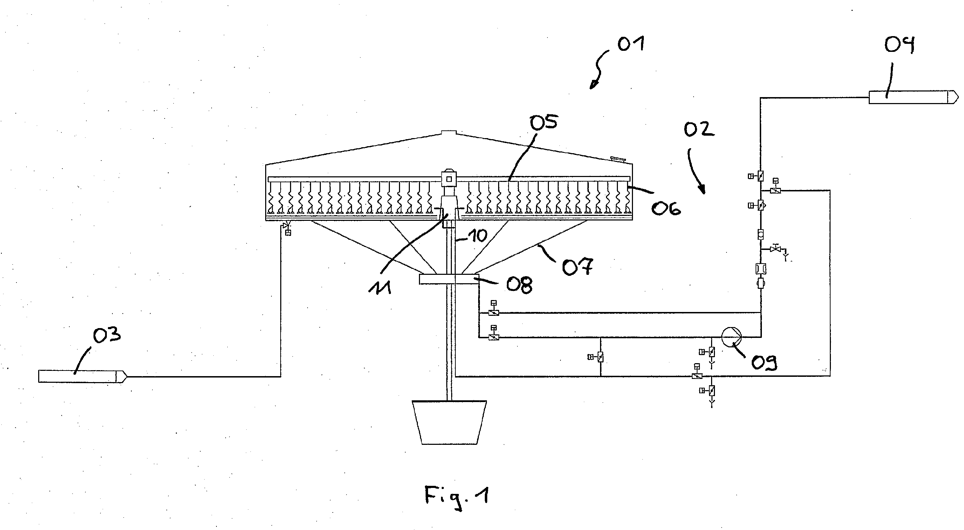

**Fig. 1** zeigt einen Läuterbottich 01 zur Gewinnung von Würze durch Abläutern von Maische in schematisierter Ansicht. Am Läuterbottich 01 ist dabei zusätzlich die Verrohrung 02 dargestellt, die das Trübwürzepumpen vor Beginn des eigentlichen Abläutervorgangs ermöglicht. Der Läuterbottich 01 wird aus einem Maischegefäß 03 mit Maische befüllt. Nach dem Abläutern gelangt die gefilterte Würze über die Verrohrung 02 in nachgeordnete und in Fig. 1 nicht näher dargestellte Sudhausgefäße 04, beispielsweise einen Würzevorlauftank zur Zwischenspeicherung der Würze oder eine Würzepfanne.

Im Läuterbottich 01 ist ein Hackwerk 05 mit einer Vielzahl von Aufhackmessern 06 vorgesehen. Durch rotatorischen Antrieb und/oder Höhenverstellung des Hackwerks 05 kann der im Läuterbottich 01 zur Filtration vorgesehene Treberkuchen aufgehackt werden. Die im Läuterbottich 01 gefilterte Läuterwürze kann über Sammelleitungen 07 in ein Sammelgefäß 08 geleitet werden. Aus dem Sammelgefäß 08 kann die Würze dann mittels einer Förderpumpe 09, die auch zum Trübwürzepumpen genutzt wird, zum Sudhausgefäß 04 weitergefördert werden.

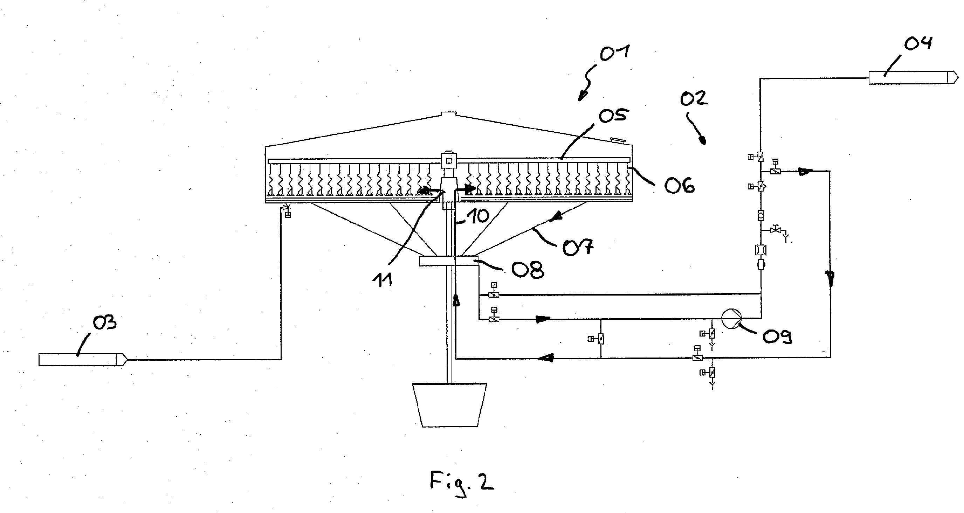

**Fig. 2** zeigt in schematisierter Ansicht die Würzeströmung am Läuterbottich 01 während des Trübwürzepumpens. Die nach unten durch den Senkboden abgeflossene, noch stark getrübte Trübwürze wird über die Sammelleitungen 07 zum Sammelgefäß 08 geleitet und von dort mittels der Förderpumpe 09 durch die Trübwürzeverrohrung 10 zurück zum Läuterbottich gepumpt. Die Trübwürzeverrohrung 10 beinhaltet alle Rohrabschnitte der Verrohrung 02, die während des in Fig. 2 dargestellten Trübwürzepumpens durchlaufen werden. Im Läuterbottich 01 wird die Trübwürze dann am Bottichständer 11 zurück in den Läuterbottich eingepumpt, wobei die Würze dadurch wieder oberhalb des Senkbodens eingelagert wird und erneut durch das Treberbett filtriert wird. Die Trübwürze wird in bekannter Weise so lange umgepumpt, bis sich eine gewünschte geringe Trübung in der Würze einstellt. Dabei bildet sich in bekannter Weise auch der Treberkuchen als Filterbett auf dem Senkboden so aus, dass durch denselben die nach unten abfließende Würze zunehmend filtriert wird.

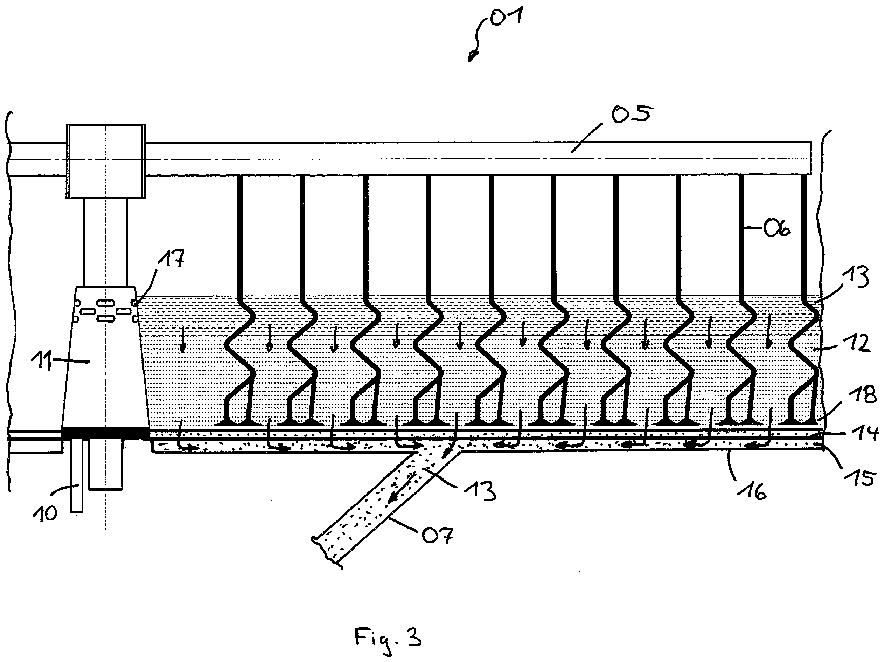

**Fig. 3** zeigt die Würzeströmung während des Trübwürzepumpens in einer vergrößerten Darstellung. Die Trübwürze 13 fließt durch den Treberkuchen 12 und den darunterliegenden Senkboden 14 ab. Nach Durchfließen des Senkbodens 14 sammelt sich die Würze 13 im Zwischenraum 15 zwischen dem Senkboden 14 und dem Läuterbottichboden 16. Durch die Sammelleitungen 07 fließt die Würze 13 zum Sammelgefäß 08 und wird von dort durch die Trübwürzeverrohrung 10 zum Bottichständer 11 gepumpt. Am Bottichständer 11 mündet die Trübwürzeverrohrung 10 durch beispielsweise Schlitze 17 in das Innere des Läuterbottichs 01. Die Würze 13 fließt durch die Schlitze 17 wiederum in den Bereich oberhalb des Treberkuchens 12 und kann somit erneut gefiltert werden, bis ein ausreichend geringer Trübungsgrad erreicht ist.

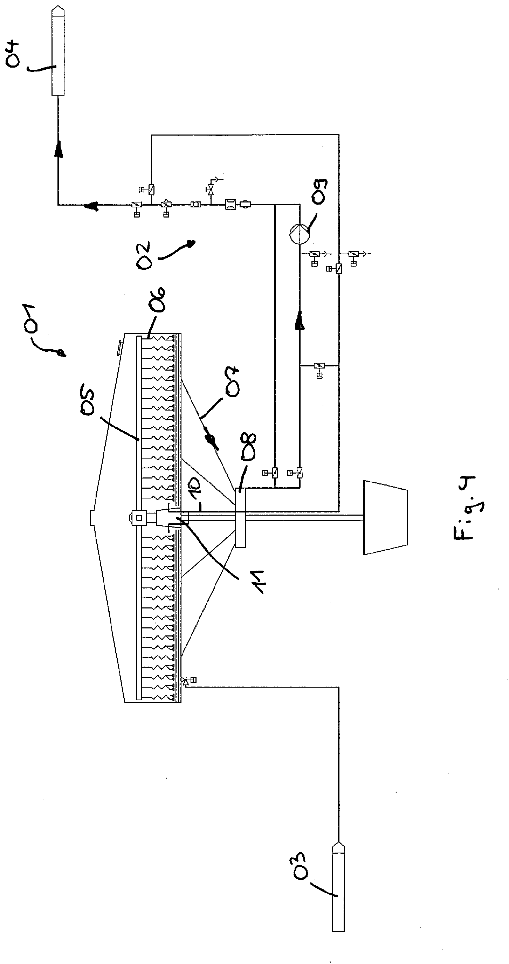

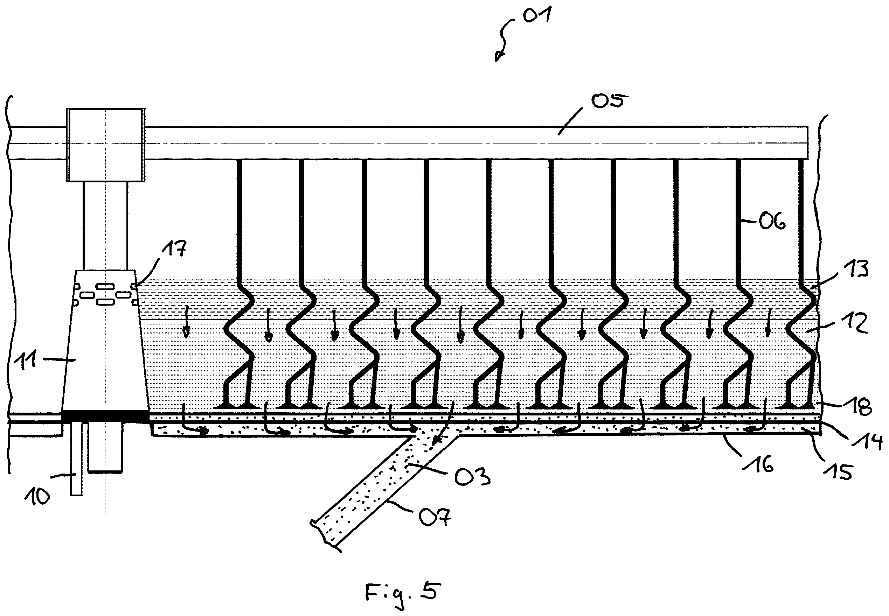

Die Aufhackmesser 06 sind in Fig. 3 in ihrer tiefsten Stellung dargestellt. Man erkennt, dass die Unterseite der Aufhackmesser 06 einen Sicherheitsabstand zur Oberseite des Senkbodens 14 aufweist. Dieser untere Teil 18 des Treberkuchens 12 kann mit dem Hackwerk 05 nicht aufgelockert werden, da es für die Einhaltung der mechanischen Sicherheit dringend erforderlich ist, dass ein Abstand zwischen den Aufhackmessern 06 und dem Senkboden 14 vorhanden ist. Sobald die Trübung der durch die Sammelleitungen 07 abfließenden Würze 13 ausreichend gering ist, kann mit dem eigentlichen Abläutern der Würze aus dem Läuterbottich 01 begonnen werden. Dies wird anhand der Darstellungen in Fig. 4 und Fig. 5 näher erläutert.

**Fig. 4** zeigt die Würzeströmung durch die Verrohrung 02 während des eigentlichen Abläuterns. Die im Treberkuchen 12 ausreichend gefilterte Würze 13 fließt durch die Sammelleitungen 07 zum Sammelgefäß 08 und wird anschließend durch Antrieb der Förderpumpe 09 zum Sudhausgefäß 04, beispielsweise einem Würzevorlauftank oder einer Würzepfanne, gepumpt.

**Fig. 5** zeigt das Innere des Läuterbottichs 01 während des Abläuterns in vergrößerter Darstellung. Die Würze 13 fließt durch den Treberkuchen 12 und den darunter vorgesehenen Senkboden 14 nach unten ab und sammelt sich im Zwischenraum 15. Von dort fließt die Würze 13 dann durch die Sammelleitungen 07 in Richtung des Sammelgefäßes 08.

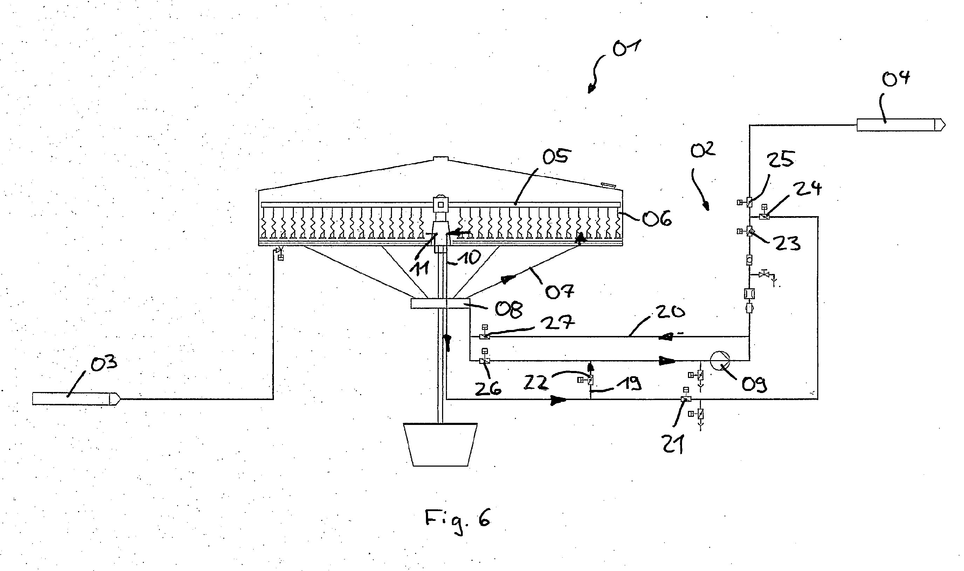

**Fig. 6** zeigt den Würzefluss am Läuterbottich 01 bei Durchführung des erfindungsgemäßen Verfahrens. Sobald die Druckdifferenz in der Würze 13 ein vorgegebenes Maß überschritten hat und somit die Permeabilität des Treberkuchens 12 unterhalb eines vorgegebenen Mindestmaßes gefallen ist, wird zur Erhöhung der Permeabilität ein Tiefschnitt mit dem Hackwerk 05 durchgeführt. Zugleich wird zur Auflockerung des unteren Teils 18 des Treberkuchens 12 das erfindungsgemäße Verfahren durchgeführt. Dazu wird die Würze 13 durch die Schlitze 17 des Bottichständers 11 aus dem Inneren des Läuterbottichs 01 abgezogen und durch die Verrohrung 02 zum Sammelgefäß 08 gepumpt. Durch entsprechenden Antrieb der Förderpumpe 08 gelangt die Würze 13 dann durch die Sammelleitungen 07 in den Läuterbottich 01 und wird in den Zwischenraum 15 unterhalb des Senkbodens 14 eingefördert. Um die Trübwürzeverrohrung 10 innerhalb der Verrohrung 02 mit nur geringen Modifikationen für die Durchführung des erfindungsgemäßen Verfahrens nutzen zu können, weist die Verrohrung 02 zwei zusätzliche Bypassleitungen 19 und 20 auf. Durch Umschalten der Absperrorgane 22, 23, 25, 26 und 27 kann der Würzefluss so umgelenkt werden, dass dieser unter Nutzung eines Großteils der Trübwürzeverrohrung 10 in umgekehrter Richtung vom Bottichständer 11 in den Zwischenraum 15 gepumpt werden kann. Dabei kann die einläufige Förderpumpe 09 genutzt werden.

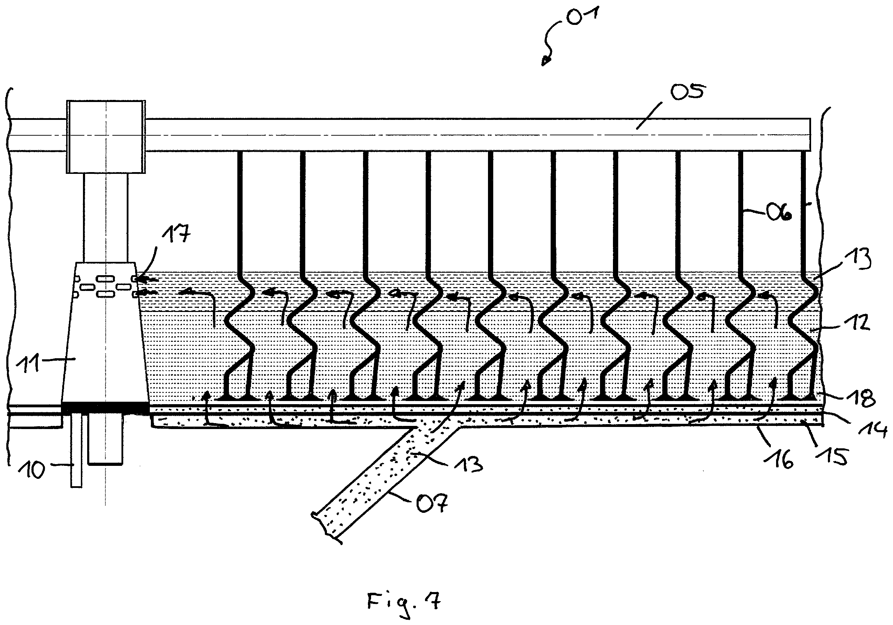

**Fig. 7** zeigt den Läuterbottich 01 bei Durchführung des erfindungsgemäßen Verfahrens in vergrößerter Darstellung. Die Würze 13 fließt durch die Schlitze 17 im Bottichständer 11 ab und wird durch den in Fig. 6 dargestellten Teil der Verrohrung 02 von unten in den Zwischenraum 15 eingepumpt. Ausgehend vom Zwischenraum 15 strömt die Würze dann aufgrund des Förderdrucks der Förderpumpe 09 nach oben durch die Öffnungen im Senkboden 14 und dringt in den unteren Teil 18 des Treberkuchens 12 ein. Durch diese Würzeströmung wird der Treberkuchen 12, insbesondere der mit dem Hackwerk 05 nicht auflockerbare untere Teil 18 des Treberkuchens 12, aufgelockert und damit die Durchlässigkeit in gewünschter Weise erhöht. Sobald die gewünschte Durchlässigkeit erreicht ist, beispielsweise nach Ablauf einer vorbestimmten Zeit für die Durchführung des erfindungsgemäßen Verfahrens, wird dieses wieder beendet und das Abläutern, wie in Fig. 4 und Fig. 5 dargestellt fortgesetzt.

Das erfindungsgemäße Verfahren kann auch mehrmals in einem Sud durchgeführt werden. Außerdem muss es nicht zwingend durchgeführt werden, wenn beispielsweise die Würze sehr gut abläuft.

Denkbar ist es auch, dass man in WFig. 06 nicht die Würze aus dem Läuterbottich über den Bypass 19 verwendet, um das Treberbett aufzulockern. Alternativ oder additiv kann auch eine bereits abgeläuterte Würze aus dem Sudhausgefäß 04 über die Absperrorgane 25. 24, 21 und 19 zur Pumpe und weiter über die Armatur 27 in den Zwischenraum 15 eingepumpt werden. Hierfür ist es gegebenenfalls nötig, das Absperrorgan 19 zwischen Absperrorgan 21 und 24 zu versetzen oder ein zusätzliches Absperrorgan zu installieren, um die Trübwürzeverrohrung 10 nahe dem Bottichständer 11 abzusperren. Hierbei ist darauf zu achten, dass die verwendete Würze nicht das Konzentrationsgefälle im Treberkuchen zerstört und damit andere Probleme beim Läutern entstehen. Beispielsweise verschlechtert ein zerstörtes Konzentrationsgefälle erfahrungsgemäß in den meisten Fällen die Extraktausbeute des Läuterbottichs.

## Patentansprüche

1. Verfahren zur Gewinnung von Würze (13) durch Abläutern von Maische mit einem Läuterbottich (01), wobei der Läuterbottich (01) einen Läuterbottichboden (16) und einen über dem Läuterbottichboden (16) beabstandet angeordneten Senkboden (14) aufweist, und wobei im Läuterbottichboden (16) Sammelöffnungen mit daran angeschlossenen Sammelleitungen (07) vorgesehen sind, durch die die Würze (13) aus dem Läuterbottich (01) abgeführt werden kann, mit folgenden Verfahrensschritten:
a) Unterbrechen des Abläuterns bei Unterschreiten einer vorgegebenen Durchlässigkeit des auf dem Senkboden (14) gebildeten Treberkuchens (12);
b) Einfördern von Würze (13) in den zwischen Läuterbottichboden (16) und Senkboden (14) gebildeten Zwischenraum (15);
c) vertikal nach oben gerichtetes Überströmen der Würze (13) aus dem Zwischenraum (15) durch die Öffnungen des Senkbodens (14) hindurch in den Treberkuchen (12).

2. Verfahren nach Anspruch 1,
**dadurch gekennzeichnet,**
**dass** der Treberkuchen (12) während des Überströmens der Würze (13) zusätzlich mit einem im Läuterbottich (01) vorgesehenen Hackwerk (05) aufgelockert wird.

3. Verfahren nach Anspruch 2,
**dadurch gekennzeichnet,**
**dass** das Hackwerk (05) während des Überströmens der Würze (13) mit einem Tiefschnitt in der tiefsten Stellung rotiert, wobei die Unterseiten der Aufhackmesser (06) in der tiefsten Stellung des Hackwerks (05) unter Einhaltung eines Sicherheitsabstands kurz über der Oberseite des Senkbodens (14) bewegt werden.

4. Verfahren nach einem der Ansprüche 1 bis 3,
**dadurch gekennzeichnet,**
**dass** das Abläutern bei Überschreiten einer vorgegebenen Druckdifferenz zwischen der Würze (13) auf dem Treberkuchen (12) und der Würze (13) unter dem Treberkuchen (12) unterbrochen wird.

5. Verfahren nach einem der Ansprüche 1 bis 4,
**dadurch gekennzeichnet,**
**dass** die über dem Treberkuchen (12) befindliche Würze (13) aus dem Läuterbottich (01) abgepumpt und in den zwischen Läuterbottichboden (16) und Senkboden (14) gebildeten Zwischenraum (15) eingepumpt wird.

6. Verfahren nach Anspruch 5,
**dadurch gekennzeichnet,**
**dass** die Würze (13) durch eine am Bottichständer (11) mündende Leitung aus dem Läuterbottich (01) abgepumpt wird.

7. Verfahren nach einem der Ansprüche 1 bis 6,
**dadurch gekennzeichnet,**
**dass** die Würze (13) durch die am Läuterbottichboden (16) vorgesehenen Sammelleitungen (07) in den zwischen Läuterbottichboden (16) und Senkboden (14) gebildeten Zwischenraum (15) eingepumpt wird.

8. Verfahren nach einem der Ansprüche 1 bis 7,
**dadurch gekennzeichnet,**
**dass** am Läuterbottich (01) eine Trübwürzeverrohrung (10) zum zirkulierenden Umpumpen von Trübwürze vorgesehen ist, wobei die Trübwürzeverrohrung (10) zumindest teilweise zum Abpumpen der Würze (13) aus dem Läuterbottich (01) und/oder zum Einpumpen der Würze (13) in den zwischen Läuterbottichboden (16) und Senkboden (14) gebildeten Zwischenraum (15) verwendet wird.

9. Verfahren nach Anspruch 8,
**dadurch gekennzeichnet,**
**dass** in der Trübwürzeverrohrung (10) eine einläufige Förderpumpe (09) vorgesehen ist, mit der Würze (13) in nur eine Richtung stromabwärts gefördert werden kann, wobei an der Trübwürzeverrohrung (10) zusätzlich zwei absperrbare Bypassleitungen (19, 20) vorgesehen sind, und wobei durch die erste Bypassleitung (19) Würze (13), die aus dem Läuterbottich (01) abgepumpt wurde, zu einer stromaufwärts der Förderpumpe (09) angeordneten ersten Mündungsstelle in der Trübwürzeverrohrung (10) gefördert wird, und wobei durch die zweite Bypassleitung (20) Würze (13), die durch die Förderpumpe (09) gefördert wurde, von einer zweiten Mündungsstelle durch die Trübwürzeverrohrung (10) in den zwischen Läuterbottichboden (16) und Senkboden (14) gebildeten Zwischenraum (15) gefördert wird.

10. Verfahren nach Anspruch 9,
**dadurch gekennzeichnet,**
**dass** an den beiden Mündungsstellen jeweils Absperrorgane (21, 22, 23, 24, 25, 27) vorgesehen sind, mit denen die Mündungsstellen der Bypassleitungen (19, 20) beim Trübwürzepumpen und/oder Würzeläutern abgesperrt werden.

11. Verfahren nach einem der Ansprüche 1 bis 10,
**dadurch gekennzeichnet,**
**dass** die nach Ende des Trübwürzepumpens in der Trübwürzeverrohrung (10) verbliebene Trübwürze während des Abläuterns des Anschwänzwassers zumindest teilweise in den zwischen Läuterbottichboden (16) und Senkboden (14) gebildeten Zwischenraum (15) eingefördert wird.

12. Verfahren nach einem der Ansprüche 1 bis 11,
**dadurch gekennzeichnet,**
**dass** das Einfördern von Würze (13) in den zwischen Läuterbottichboden (16) und Senkboden (16) gebildeten Zwischenraum (15) zu Beginn des Abläuterns der Vorderwürze aus dem Läuterbottich (01) ausgeschlossen ist.

13. Verfahren nach Anspruch 12,
**dadurch gekennzeichnet,**
**dass** das Einfördern von Würze (13) in den zwischen Läuterbottichboden (16) und Senkboden (14) gebildeten Zwischenraum (15) ausgeschlossen ist, bis 20 % des Vorderwürzevolumens aus dem Läuterbottich (01) abgeläutert sind.

14. Verfahren nach einem der Ansprüche 1 bis 13,
**dadurch gekennzeichnet,**
**dass** das Einfördern von Würze (13) in den zwischen Läuterbottichboden (16) und Senkboden (14) gebildeten Zwischenraum (15) zum Ende des Abläuterns des Anschwänzwassers aus dem Läuterbottich (01) ausgeschlossen ist.

15. Verfahren nach Anspruch 14,
**dadurch gekennzeichnet,**
**dass** das Einfördern von Würze (13) in den zwischen Läuterbottichboden (16) und Senkboden (14) gebildeten Zwischenraum (15) ausgeschlossen ist, sobald 40 % des Anschwänzwasservolumens aus dem Läuterbottich (01) abgeläutert sind.

## Claims

1. A method for obtaining wort (13) by lautering mash with the aid of a lauter tun (01), the lauter tun (01) having a lauter tun bottom (16) and a false bottom (14) which is disposed at a distance above the lauter tun bottom (16), and collecting openings having collecting lines (07) connected thereto being provided in the lauter tun bottom (16), the wort (13) being discharged from the lauter tun (01) through said collecting openings, the method having the following method steps:
a) interrupting the lautering process when the permeability of the spent grains bed (12) which is formed on the false bottom (14) falls below a specified value;
b) conveying wort (13) into the space (15) which is formed between the lauter tun bottom (16) and the false bottom (14);
c) letting the wort (13) overflow vertically upwards from the space (15) through the openings of the false bottom (14) into the spent grains bed (12).

2. The method according to claim 1,
**characterised in that**
while the wort (13) is overflowing, the spent grains bed (12) is additionally loosened up with the aid of a chopping mill (05) which is provided in the lauter tun (01).

3. The method according to claim 2,
**characterised in that**
the chopping mill (05) rotates in the deepest position with a deep cut while the wort (13) is overflowing, the undersides of the chopping blades (06) being moved just above the upper side of the false bottom (14) in the deepest position of the chopping mill (05), maintaining a safety distance.

4. The method according to any one of the claims 1 to 3,
**characterised in that**
lautering is interrupted when a specified pressure difference between the wort (13) on the spent grains bed (12) and the wort (13) under the spent grains bed (12) is exceeded.

5. The method according to any one of the claims 1 to 4,
**characterised in that**
the wort (13) above the spent grains bed (12) is pumped from the lauter tun (01) and into the space (15) which is formed between the lauter tun bottom (16) and the false bottom (14).

6. The method according to claim 5,
**characterised in that**
the wort (13) is pumped from the lauter tun (01) through a line ending at the tun stand (11).

7. The method according to any one of the claims 1 to 6,
**characterised in that**
the wort (13) is pumped into the space (15), which is formed between the lauter tun bottom (16) and the false bottom (14), through the collecting lines (07) which are provided on the lauter tun bottom (16).

8. The method according to any one of the claims 1 to 7,
**characterised in that**
a cloudy wort piping (10) for circulating cloudy wort is provided on the lauter tun (01), said cloudy wort piping (10) at least partially being used for pumping the wort (13) out of the lauter tun (01) and/or for pumping the wort (13) into the space (15) which is formed between the lauter tun bottom (16) and the false bottom (14).

9. The method according to claim 8,
**characterised in that**
a unidirectional conveyor pump (09) is provided in the cloudy wort piping (10), wort (13) being conveyed downstream in only one direction with the aid of said conveyor pump (09), two shut-off bypass lines (19, 20) being additionally provided on the cloudy wort piping (10), and wort (13) which has been pumped out of the lauter tun (01) being conveyed through the first bypass line (19) to a first mouth which is disposed upstream of the conveyor pump (09) in the cloudy wort piping (10), and wort (13) which has been conveyed by the conveyor pump (09) being conveyed through the second bypass line (20) from a second mouth through the cloudy wort piping (10) into the space (15) which is formed between the lauter tun bottom (16) and the false bottom (14).

10. The method according to claim 9,
**characterised in that**
shut-off elements (21, 22, 23, 24, 25, 27) are provided on each of the two mouths, the mouths of the bypass lines (19, 20) being shut off with the aid of said shut-off elements (21, 22, 23, 24, 25, 27) when the cloudy wort is being pumped and/or the wort is being lautered.

11. The method according to any one of the claims 1 to 10,
**characterised in that**
the cloudy wort which remains in the cloudy wort piping (10) after the end of the pumping process of the cloudy wort is at least partially conveyed into the space (15) which is formed between the lauter tun bottom (16) and the false bottom (14) while the sparging water is being lautered.

12. The method according to any one of the claims 1 to 11,
**characterised in that**
conveying wort (13) into the space (15) which is formed between the lauter tun bottom (16) and the false bottom (14) is precluded when the process of lautering the first wort from the lauter tun (01) starts.

13. The method according to claim 12,
**characterised in that**
conveying wort (13) into the space (15) which is formed between the lauter tun bottom (16) and the false bottom (14) is precluded until 20 % of the first wort volume have been lautered from the lauter tun (01).

14. The method according to any one of the claims 1 to 13,
**characterised in that**
conveying wort (13) into the space (15) which is formed between the lauter tun bottom (16) and the false bottom (14) is precluded at the end of the process of the sparging being lautered from the lauter tun (01).

15. The method according to claim 14,
**characterised in that**
conveying wort (13) into the space (15) which is formed between the lauter tun bottom (16) and the false bottom (14) is precluded as soon as 40 % of the sparging water volume have been lautered from the lauter tun (01).

## Revendications

1. Procédé destiné à obtenir du moût (13) par filtration de trempe à l'aide d'une cuve de filtration (01), la cuve de filtration (01) comportant un fond de cuve de filtration (16) et un faux fond (14) qui est disposé à une distance au-dessus du fond de cuve de filtration (16), et des ouvertures de collection étant prévues dans le fond de cuve de filtration (16), lesdites ouvertures de collection ayant des tuyaux de collection (07) qui sont reliés à ces dernières et à travers lesquels le moût (13) peut être déchargé de la cuve de filtration (01), le procédé ayant les étapes de procédé suivantes :
a) interrompre la filtration quand la perméabilité du gâteau de drêches (12) formé su le faux fond (14) tombe en dessous d'une valeur prédéfinie ;
b) convoyer du moût (13) dans l'interstice (15) formé entre le fond de cuve de filtration (16) et le faux fond (14) ;
c) faire déborder le moût (13) verticalement vers le haut de l'interstice (15) à travers les ouvertures du faux fond (14) dans le gâteau de drêches (12).

2. Procédé selon la revendication 1,
**caractérisé en ce que**
le gâteau de drêches (12), lorsque le moût (13) déborde, est en outre biné à l'aide d'un organe de binage (05) qui est prévu dans la cuve de filtration (01).

3. Procédé selon la revendication 2,
**caractérisé en ce que**
l'organe de binage (05) tourne dans la position la plus basse avec une coupure profonde lorsque le moût (13) déborde, les faces inférieures des pioches (06), dans la position la plus basse de l'organe de binage (05), étant mues juste au-dessus de la face supérieure du faux fond (14), en respectant une distance de sécurité.

4. Procédé selon l'une quelconque des revendications 1 à 3,
**caractérisé en ce que**
la filtration est interrompue lorsqu'une différence de pression prédéfinie entre le moût (13) sur le gâteau de drêches (12) et le moût (13) au-dessous du gâteau de drêches (12) est dépassée.

5. Procédé selon l'une quelconque des revendications 1 à 4,
**caractérisé en ce que**
le moût (13) au-dessus du gâteau de drêches (12) est pompé de la cuve de filtration (01) et dans l'interstice (15) formé entre le fond de cuve de filtration (16) et le faux fond (14).

6. Procédé selon la revendication 5,
**caractérisé en ce que**
le moût (13) est pompé de la cuve de filtration (01) à travers un tuyau qui aboutit au support de cuve (11).

7. Procédé selon l'une quelconque des revendications 1 à 6,
**caractérisé en ce que**
le moût (13) est pompé dans l'interstice (15), qui est formé entre le fond de cuve de filtration (16) et le faux fond (14), à travers les tuyaux de collection (07) qui sont prévus sur le fond de cuve de filtration (16).

8. Procédé selon l'une quelconque des revendications 1 à 7,
**caractérisé en ce**
**qu'**une tuyauterie de moût trouble (10) destinée à pomper du moût trouble de façon circulante est prévue sur la cuve de filtration (01), ladite tuyauterie de moût trouble (10) étant utilisée au moins en partie pour pomper le moût (13) de la cuve de filtration (01) et/ou pour pomper le moût (13) dans l'interstice (15) formé entre le fond de cuve de filtration (16) et le faux fond (14).

9. Procédé selon la revendication 8,
**caractérisé en ce**
**qu'**une pompe d'alimentation (09) unidirectionnelle est prévue dans la tuyauterie de moût trouble (10), ladite pompe seulement étant capable de convoyer du moût (13) dans une direction en aval, deux tuyaux de dérivation fermables (19, 20) en outre étant prévus sur la tuyauterie de moût trouble (10), et du moût (13) qui a été pompé de la cuve de filtration (01) étant convoyé, à travers le premier tuyau de dérivation (19), vers une première embouchure dans la tuyauterie de moût trouble (10) qui est disposée en amont de la pompe d'alimentation (09), et du moût (13) qui a été pompé à l'aide de la pompe d'alimentation (09) étant convoyé, à travers le deuxième tuyau de dérivation (20), à partir d'une deuxième embouchure à travers la tuyauterie de moût trouble (10) dans l'interstice (15) formé entre le fond de cuve de filtration (16) et le faux fond (14).

10. Procédé selon la revendication 9,
**caractérisé en ce que**
des organes de fermeture (21, 22, 23, 24, 25, 27) sont prévus sur les deux embouchures, les embouchures des tuyaux de dérivation (19, 20) étant fermées à l'aide desdits organes de fermeture (21, 22, 23, 24, 25, 27) lorsque le moût trouble est pompé et/ou le moût est filtré.

11. Procédé selon l'une quelconque des revendications 1 à 10,
**caractérisé en ce que**
le moût trouble qui reste dans la tuyauterie de moût trouble (10) après la fin du pompage du moût trouble est convoyé, lorsque l'eau de rinçage est filtrée, au moins en partie dans l'interstice (15) formé entre le fond de cuve de filtration (16) et le faux fond (14).

12. Procédé selon l'une quelconque des revendications 1 à 11,
**caractérisé en ce que**
convoyer du moût (13) dans l'interstice (15) formé entre le fond de cuve de filtration (16) et le faux fond (14) est impossible au début de la filtration du moût antérieur de la cuve de filtration (01).

13. Procédé selon la revendication 12,
**caractérisé en ce que**
convoyer du moût (13) dans l'interstice (15) formé entre le fond de cuve de filtration (16) et le faux fond (14) est impossible jusqu'à ce que 20 % du volume du moût antérieur soient filtrés de la cuve de filtration (01).

14. Procédé selon l'une quelconque des revendications 1 à 13,
**caractérisé en ce que**
convoyer du moût (13) dans l'interstice (15) formé entre le fond de cuve de filtration (16) et le faux fond (14) est impossible vers la fin de la filtration de l'eau de rinçage de la cuve de filtration (01).

15. Procédé selon la revendication 14,
**caractérisé en ce que**
convoyer du moût (13) dans l'interstice (15) formé entre le fond de cuve de filtration (16) et le faux fond (14) est impossible dès que 40 % du volume de l'eau de rinçage sont filtrés de la cuve de filtration (01).
